# EUROPEAN PATENT SPECIFICATION

(11) **EP 3 703 227 B1**
(45) Date of publication and mention of the grant of the patent: **17.09.2025**
(21) Application number: 20152058.2
(22) Date of filing: 15.01.2020
(51) Int. Cl.: H02K 1/32, H02K 1/276, H02K 9/06

(54) **ROTARY ELECTRIC DEVICE**
ROTATIONSELEKTROMASCHINE
DISPOSITIF ÉLECTRIQUE ROTATIF

(30) Priority: 27.02.2019 JP 2019034678
(43) Date of publication of application: 02.09.2020
(73) Proprietor: Kabushiki Kaisha Toshiba, Minato-ku Tokyo (JP)
(72) Inventor: KOYAMA, Taihei, Tokyo, 105-0023 (JP); HASEBE, Toshio, Kanagawa 212-0013 (JP); NAITO, Katsuhito, Kanagawa 212-0013 (JP)
(74) Representative: AWA Sweden AB

(56) References cited:
- JP-A- 2002 345 188
- JP-A- 2013 090 479
- JP-A- 2017 028 862
- JP-A- 2019 017 230

## Description

### FIELD

Embodiments described herein relate generally to a rotary electric device in which a permanent magnet is provided in a rotor thereof.

### BACKGROUND

In recent years, intensive researches and developments have been conducted on permanent magnets, and a permanent magnet of a high magnetic energy product is developed. A permanent-magnet type rotary electric device which employs such a permanent magnet is being applied to a motor or a generator for trains and vehicles. Generally, the permanent magnet synchronous motor (PMSM) is of the mainstream in use, and there are a number of interior permanent magnet motors (IPM) are used, in which a permanent magnet is embedded in the core of the rotor. Since the permanent magnet is used in the structure inside the device, the rotary electric device is formed to have a sealed structure so as to avoid entering of dust. However, in the case of a rotary electric device with large capacity, for example, the main motor for railroads, etc., the temperature inside the device becomes high easily due to generation of heat from the coil or iron core. Inside the main motor, a stirring flow occurs in spaces on a drive side and an anti-drive side due to rotation of the rotor, which serves to cool down the surroundings of the coil, etc.

A certain permissible temperature is determined for each structural member of the rotary electric device. Especially, the upper-limit permissible temperature of the permanent magnet is lower than those of the other members of the device, and if the temperature exceeds the permissible upper limit, the performance deteriorates. Therefore, it is necessary to use the permanent magnet within the permissible temperature range. However, since the permanent magnet itself is embedded in the rotor core, the cooling by the stirring flow does not contribute to the permanent magnet, and thus it is difficult to cool down the permanent magnet. Under these circumstances, in order to lower the temperature of the rotor, a cooling system is employed, in which a fan is prepared in the machine and a rotor duct prepared in the rotor is used to induce circulation flow.

Incidentally, the sites where main loss occurs in the rotor are near the outer surface of the rotor; however, the gap between the outer surface of the rotor and the stator is narrow, thereby making it difficult to increase the amount of ventilation. Moreover, the rotor duct of the rotor is separated from the permanent magnet, and with this configuration, it cannot exhibit sufficient cooling performance onto the permanent magnet. Thus, the cooling performance may become insufficient in the case of the volume of the rotary electric device is enlarged or the size thereof is reduced.

Previous patent literature JP 2002 345188 A discloses a dynamo-electric rotating machine with direct cooling of permanent magnets, without decreasing the output of a dynamo-electric machine. Further, patent literature JP 2019 017230 A discloses a rotor, a rotary electric machine, and a compressor wherein the cooling performance of permanent magnets of the rotor are improved and the axial center part of a stator coil is efficiently cool.

### BRIEF DESCRIPTION OF THE DRAWINGS

FIG. 1 is a longitudinal cross sectional view showing a permanent-magnet type rotary electric device according to a first embodiment.
FIG. 2 is a transverse cross sectional view of the rotary electric device.
FIG. 3 is a perspective view showing a rotor of the rotary electric device.
FIG. 4 is an exploded perspective view of the rotor with an iron core and an end plate disassembled therefrom.
FIG. 5 is a perspective view showing an inner fan of the rotary electric device.
FIG. 6 is a cross sectional view schematically showing the relationship between the locations of the magnets provided in the rotor core and the positions of blades of the inner fan.
FIG. 7 is a cross sectional view schematically showing the relationship between the locations of the magnets provided in the rotor core and the positions of blades of the inner fan in a rotary electric device according to a second embodiment.
FIG. 8 is a cross sectional view schematically showing the relationship between the locations of the magnets provided in the rotor core and the positions of blades of the inner fan in a rotary electric device according to a third embodiment.
FIG. 9 is an exploded perspective view showing the rotor core and end plate of a rotary electric device according to a fourth embodiment.

### DETAILED DESCRIPTION

The present invention is a rotary electric device as defined in claim 1. Various embodiments will be described hereinafter with reference to the accompanying drawings. In general, according to one embodiment, a rotary electric device comprises a rotor. The rotor comprises a rotation shaft provided rotatable around a central axis; a rotor core formed of a plurality of core plates laminated, attached to the rotation shaft coaxially therewith, and including a first end surface located in one axial end side and a second end surface located in other axial end side; a plurality of permanent magnets provided in the rotor core; and a pair of end plates disposed respectively on the first end surface and the second end surface of the rotor core. The rotor core comprises a plurality of cavity holes each formed to penetrate the rotor core in an axial direction and opened to the first end surface and the second end surface of the rotor core. The plurality of permanent magnets are accommodated in the cavity holes and extend in the axial direction of the rotor core. Each of the end plates comprises a plurality of vent holes communicating at least partially with the cavity holes, respectively.

Note that what is disclosed in this specification is merely an example. Appropriate modifications which can be easily conceived by a person ordinarily skilled in the art without departing from the scope of the present invention as defined in the appended claims. To further clarify explanation, for example, the width, thickness or shape of each structure may be schematically shown in the drawings compared with the actual forms. Note that the drawings are merely examples and do not limit the interpretation of the present invention. In the specification and drawings, elements which are identical to those of the already-mentioned figures are denoted by the same reference numbers. Thus, the detailed explanation of such elements may be omitted.

### (First Embodiment)

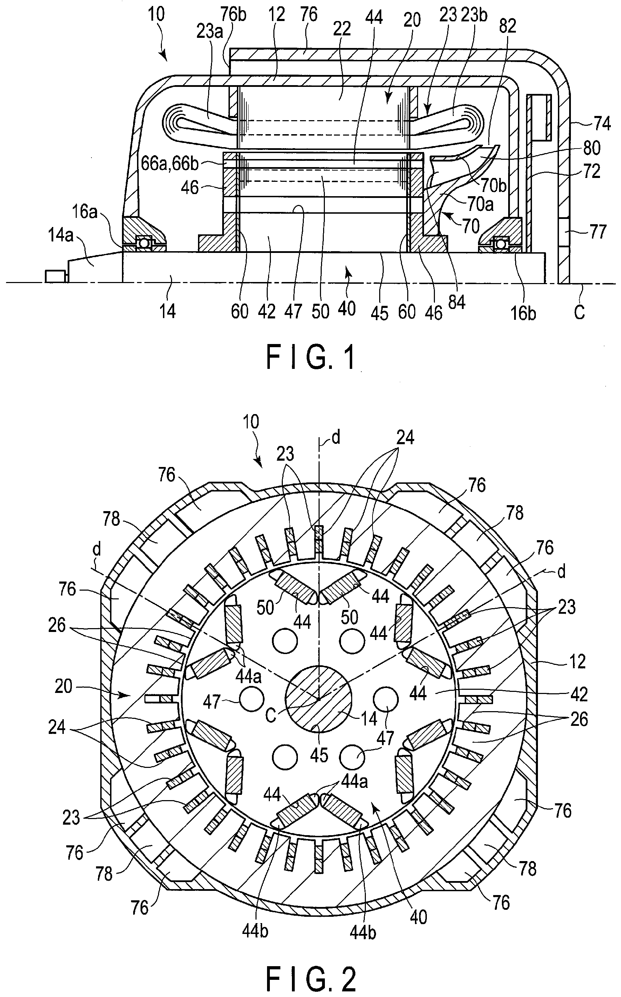

FIG. 1 is a longitudinal cross sectional view showing a one-side half of a permanent-magnet type rotary electric device according to a first embodiment, and FIG. 2 is a transverse cross sectional view of the rotary electric device.

As shown in FIG. 1, a rotary electric device 10 is configured as, for example, an inner rotor type rotary electric device. The rotary electric device 10 comprises a case 12 including a substantially cylindrical frame and brackets which block both ends of the frame so as to be integrated as one body, and a rotation shaft 14 provided to penetrate the case 12 coaxially therewith. Both axial ends of the rotation shaft 14 are supported rotatably by the case 12 via bearings 16a and 16b, respectively. The rotation shaft 14 is rotatable around a central axis C of the rotary electric device 10. Both axial ends of the rotation shaft 14 each project outward from the case 12. One end of the rotation shaft 14 is configured as a drive-side end portion 14a.

The rotary electric device 10 comprises an annular or cylindrical stator 20 supported by the case 12 and a rotor 40 arranged inside the stator 20 so as to be rotatable around the central axial C and coaxially with the stator 20.

As shown in FIGS. 1 and 2, the stator 20 comprises a cylindrical stator core 22 and an armature coil 23 wound around the stator core 22. The stator core 22 is constituted by coaxially laminating a number of circular electromagnetic steel plates (core plates) of a magnetic material, for example, silicon steel. The stator core 22 is fixed to the case 12 and is located coaxially with the central axis C. A plurality of slots 24 are formed in an inner circumferential portion of the stator core 22. The slots 24 are arranged in a circumferential direction at equal intervals. With the slots 24 thus formed, the inner circumferential portion of the stator core 22 is configured as a number of stator teeth 26 facing the rotor 40. The armature coil 23 is embedded into the slots 24 and wound around the stator teeth 26. Coil ends 23a and 23b of the armature coil 23 project out from both end surfaces in a lamination (axial) direction of the stator core 22 along the axial direction.

The rotor 40 comprises the rotation shaft 14 described above, a cylindrical rotor core 42 fixed to substantially an axial central portion of the rotation shaft 14, and a plurality of permanent magnets 50 embedded in the rotor core 42. The rotor 40 is coaxially arranged inside the stator 20 with a slight gap therebetween. More specifically, an outer circumferential surface of the rotor core 42 faces an inner circumferential surface of the stator core 22 with the slight gap (air gap) therebetween. The rotor core 42 includes an inner hole 45 formed coaxial with the central axis C. The rotation shaft 14 is inserted and fit with the inner hole 45, so as to extend coaxially with the rotor core 42.

The rotor 40 further comprises a pair of end plates 60 stacked respectively on both axial end surfaces of the rotor core 42. The end plates 60 will be described later. The rotor core 42 is sandwiched between a pair of core holders 46 from both axial end surfaces and held in a predetermined position. The core holders 46 are fixed to the rotation shaft 14. A plurality of air ducts 47 are formed in the rotor core 42 and the core holders 46, so as to penetrate them in the axial direction. These air ducts 47 are arranged at constant intervals in the circumferential direction around the central axis C.

In this embodiment, the rotary electric device 10 comprises an inner fan (first cooling fan) 70 and an outer fan (second cooling fan) 72, fixed to the rotation shaft 14. The inner fan 70 is disposed inside of the case 12, on an anti-drive side with respect to the rotor core 42. Here, the inner fan 70 is fixed to the core holder 46 on the anti-drive side. The outer fan 72 is attached to an anti-drive side end of the rotation shaft 14 on an outer side of the case 12.

The rotary electric device 10 includes an outer cover 74 which covers an anti-drive-side end surface of the case 12 and the outer fan 72, and a plurality of air ducts 76 extending from the outer cover 74 in the axial direction along the outer circumferential surface of the case 12, integrated as one body. A plurality of inlets 77 are formed in a central portion of the outer cover 74. The air ducts 76 extend from the outer cover 74 to a position over the drive-side end of the stator core 22 in the axial direction along the outer circumferential surface of the case 12. An extending end of each air duct 76 is opened so as to form an outlet 76b.

The outer fan 72 rotates integrally with the rotation shaft 14. When the outer fan 72 rotates, outside air is suctioned into the outer cover 74 from the inlets 77. The suctioned outside air is sent outward in the circumferential direction by the outer fan 72, and flows into the air ducts 76. Further, the outside air flows through the air ducts 76 and is exhausted outside from the outlets 76b.

An inner air duct 78 is formed in a central portion within each air duct 76. The inner air ducts 78 extend in the axial direction along the outer circumferential surface of the case 12. An end of the inner air duct 78 communicates with an inner space of the case 12 via a first vent hole (not shown) formed in the case 12, that is, an inner space located in the anti-drive side of the rotor core 42. The other end of the inner air duct 78 communicates with an inner space of the case 12 via a second vent hole (not shown) formed in the case 12, that is, an inner space located in the drive side of the rotor core 42. As will be described later, when the inner fan 70 rotates, the inner air in the case 12 is circulated in the case 12 via the inner air ducts 78.

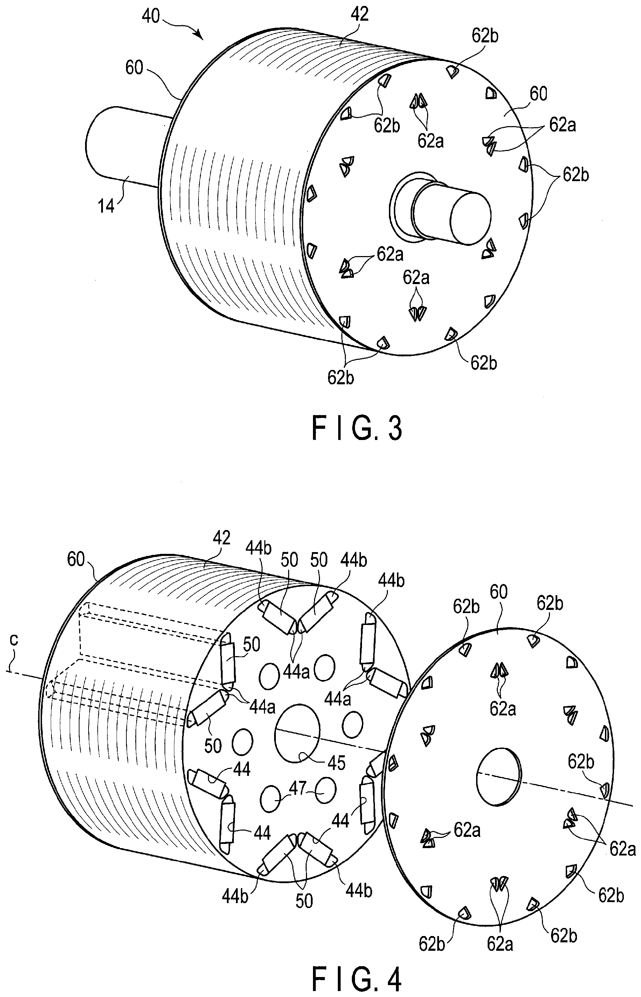

FIG. 3 is a perspective view showing the rotor of the rotary electric device, and FIG. 4 is an exploded perspective view of the rotor in a state where a rotor core and an end plate are disassembled.

As shown in FIGS. 3 and 4, the rotor core 42 is configured as a lamination body in which a number of disc-shaped electromagnetic steel plates (core plates) of, for example, about 0.5 mm in thickness are coaxially laminated in layers. The rotor core 42 includes a first axial end surface located in one axial end side and a second axial end surface located in other axial end side. The end plates 60 for holding the rotor core 42 are configured by laminating a plurality of disk plates having a thickness of about 2 mm and the same diameter as that of the rotor core 42, in layers. The end plates 60 are provided respectively on both axial end surfaces of the rotor core 42.

As shown in FIGS. 2 and 4, a plurality of magnet embedding holes (cavity holes, flux barriers) 44 are formed in the rotor core 42. Each magnet embedding hole 44 is formed to penetrate the rotor core 42 in the axial direction and is opened in each of the axial end surfaces of the rotor core 42. In this embodiment, the rotor core 42 includes six magnetic poles, and two magnet embedding holes 44 are formed in each magnetic pole.

When an axis extending in a radiation direction through the central axis C and a circumferential pole center is defined as a polar central axis (d axis), the magnet embedding hole(, which may be referred to as embedding hole hereafter) 44 is formed in both circumferential sides of each respective d axis. The embedding holes 44 each have a substantially rectangular cross section and incline to the respective d axis. In the cross section of the rotor core 42, two embedding holes 44 are arranged, for example, to form a V shape. That is, the inner circumferential ends of the embedding holes 44 are located adjacent to the d axis, so as to face each other with a slight gap therebetween. The outer circumferential ends of the embedding holes 44 are separated from the d axis in the circumferential direction of the rotor core 42, and are located near the outer circumferential surface of the rotor core 42.

A permanent magnet 50 is accommodated and disposed in each embedding hole 44. The permanent magnet 50 has a rectangular cross section. The permanent magnet 50 extends from one axial end surface to the other axial end surface of the rotor core 42. In the cross section of the rotor core 42, the two permanent magnets 50 provided in each magnetic pole are each inclined to the d axis. Each embedding hole 44 includes a rectangular magnet loading region in which the permanent magnet 50 is disposed, and an inner circumferential-side cavity (first cavity) 44a and an outer circumferential-side cavity (second cavity) 44b, which extend on both longitudinal sides of the permanent magnet 50. The inner circumferential-side cavity 44a and the outer circumferential-side cavity 44b which are in contact with the permanent magnet 50 each extend in the axial direction of the rotor core 42 and they are opened to both axial end surfaces of the rotor core 42.

As shown in FIGS. 3 and 4, vent holes 62a and 62b, which respectively have substantially identical shapes to those of the inner circumferential-side cavity 44a and the outer circumferential-side cavity 44b, are formed in each end plate 60 at positions corresponding to the inner circumferential-side cavity 44a and the outer circumferential-side cavity 44b (flux barrier) of the rotor core 42. In this embodiment, the vent holes 62a and 62b of the end plate 60 correspond to all of the inner circumferential-side cavities 44a and all of the outer circumferential-side cavities 44b. The end plates 60 are fixed onto the axial end surfaces of the rotor core 42, and the vent holes 62a and 62b respectively oppose the inner circumferential-side cavities 44a and the outer circumferential-side cavities 44b and communicate with the inner circumferential-side cavities 44a and the outer circumferential-side cavities 44b. With this structure, air flow is allowed via the vent holes 62a and 62b to the inner circumferential-side cavities 44a and the outer circumferential-side cavities 44b.

In this embodiment, each end plate 60 closes the air ducts 47 of the rotor core 42, but depending on ventilation balance, vent holes communicating with the air ducts 47 may be provided in the end plate 60 as an alternative structure. Or, in the end plate 60, vent holes of the same shape which correspond to all the inner circumferential-side cavities 44a and all the outer circumferential-side cavities 44b may not be needed, but such a structure may sufficient that only the vent holes 62a communicating with the inner circumferential-side cavities 44a or only the vent holes 62b communicating with the outer circumferential-side cavities 44b are provided. The vent holes 62a and 62b may not necessarily be the same in shape as those of the inner circumferential-side cavities 44a and the outer circumferential-side cavities 44b, but they may be larger in size than that of the inner circumferential-side cavities 44a or the outer circumferential-side cavities 44b, or may be smaller in size than that of the inner circumferential-side cavities 44a or the outer circumferential-side cavities 44b. The vent holes 62a and 62b may not necessarily communicate with the entire openings of the inner circumferential-side cavities 44a and the outer circumferential-side cavities 44b, but it may be sufficient if they communicate with at least a part of the inner circumferential-side cavity 44a and at least a part of the outer circumferential-side cavity 44b.

As shown in FIG. 1, the core holders 46 are provided respectively in both axial ends of the rotor core 42 so as to abut to the end plate 60. In the case where the outline of the core holders 46 reaches a position overlapping the vent holes 62a and 62b of the end plate 60, core holder holes 66a and 66b having the same shapes as those of the inner circumferential-side cavities 44a and the outer circumferential-side cavities 44b are formed also in the core holders 46. When the outline of the core holders 46 do not overlap the inner circumferential-side cavities 44a and the outer circumferential-side cavities 44b for ventilation, it is not necessary to prepare vent holes in the core holders 46.

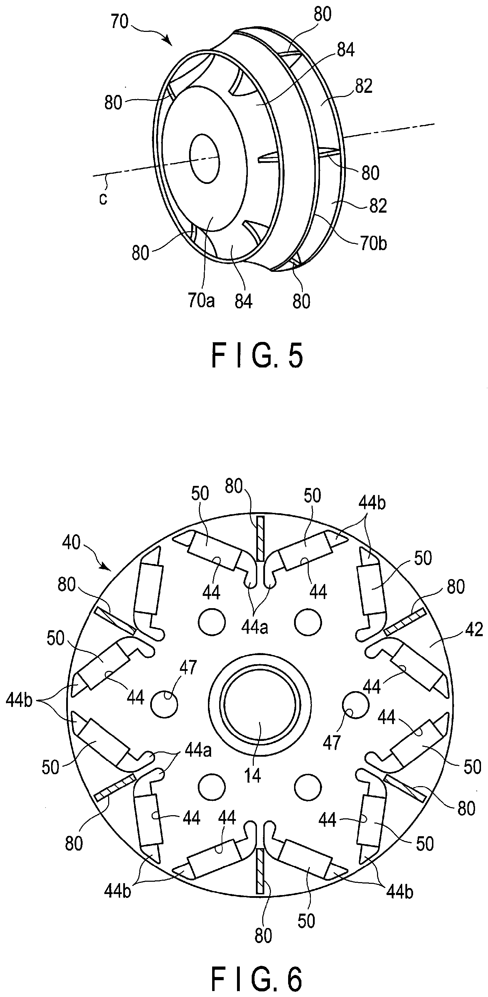

FIG. 5 is a perspective view showing the inner fan, and FIG. 6 is a side view schematically showing the arrangement of blades of the inner fan and the flux barrier (cavities) of the rotor core in relation to each other.

As shown in FIGS. 1 and 5, the inner fan 70 is configured as a centrifugal type fan, and creates winds in a radial direction as it rotates. The inner fan 70 includes a fan-shaped main body 70a, an annular outer circumferential frame 70b disposed to oppose an outer circumferential surface of the main body 70a with a gap therebetween, and a plurality of blades 80 provided between the main body 70a and the outer circumferential frame 70b, formed integrally as one body. For example, the number of blades 80 provided is six, and the blades are arranged in the circumferential direction around the central axis C at equal intervals. Each blade 80 extends in the radial direction with respect to the central axis C.

Outlets 82 of the inner fan 70 are defined between an outer circumferential end portion of the main body 70a, and an outer circumferential end portion of the outer circumferential frame 70b. The outlets 82 are opened outwards in the radial direction. The outlets 82 should be located near end portions of the coil ends 23b and also at positions where winds from the inner fan 70 do not easily collide with the coil ends 23b.

Inlets 84 of the inner fan 70 are specified between the outer circumferential surface of the main body 70a and the inner circumferential end portion of the outer circumference frame 70b. When the core holders 46 entirely cover the end plate 60, the inlets 84 of the inner fan 70 are arranged in respective positions adjacent to the core holders 46. When the outer diameter of the core holders 46 is small and the end plate 60 is exposed to the vicinity of the inner fan 70, the inlets 84 of the inner fan 70 are disposed to be close to the end plate 60. Here, the close distance should be short, and should desirably be several millimeters to about 10 mm. The inlets 84 are formed to have an outer diameter beyond the positions of the vent holes 62a and 62b of the end plate 60, and the positions of the vent holes of the core holders 46. That is, the inlets 84 are formed to have an outer diameter greater than the outermost diameter of the area in which the cavities (flux barriers) are provided in the rotor core 42. The inner fan 70 should desirably have such a shape and installation to form one duct together with the vent holes 62a and 62b and the vent holes of the core holders.

When the rotary electric device is used as a main motor of a railroad vehicle, the inner fan 70 is configured as a radial fan in which the blades 80 are installed in the radial direction. Or when the rotary electric device 10 is used as a power generator or the like, whose rotating direction is limited to one way, a blade form of high efficiency, such as a turbofan can be selected for the inner fan 70. The number of blades 80 can be freely selected, but it is preferable that it should be matched with the periodicity of arrangement of the magnet embedding holes (flux barriers) 44 in the circumferential direction, i.e., the number of patterns of the permanent magnets 50 arranged into the V shape character in the circumferential direction, (the number of poles), for example, six magnetic poles. As shown in FIG. 6, in this embodiment, the inner fan 70 comprises six blades 80, and these blades 80 are arranged in the circumferential direction at equal intervals to match the arrangement of the magnetic poles in the circumferential direction. Each blade 80 is provided in the position which matches the polar central axis (d axis) of the respective magnetic pole.

In this embodiment, the inner fan 70 is provided in the space of the case 12, which is on the anti-drive side, but it is not limited to this structure. The fan may be installed in the space on the drive side in the case 12, that is, the drive-side end of the rotation shaft 14. Moreover, the inner fan 70 is attached to the end portions of the core holders 46, but it is not limited to this structure. The place where it is attached can be selected arbitrarily as long as it rotates together with the rotation shaft 14.

An operation and effect of the rotary electric device 10 configured as above will be described.

When the rotary electric device 10 is in operation, a difference in pressure is generated between the drive-side space and the anti-drive-side space in the case 12 by the rotation of the rotor 40 or due to the projection shape of the inner fan 70, the rotor (not shown) or the like. During this period, a wind flows through the flux barriers (the inner circumferential-side cavities 44a and the outer circumferential-side cavities 44b) of the rotor core 42, which communicate the drive-side space and the anti-drive-side space with each other, thus generating a flow passing through the gap portions and the like to circulate inside the case.

When the rotary electric device 10 is in operation, the inner fan 70 and the outer fan 72 rotate together with the rotation shaft 14 of the rotor 40, and a wind is generated in a centrifugal direction by centrifugal force. An inlet 84 side of the inner fan 70 becomes negative pressure, thus suctioning a wind from the vent holes of the core holders 46 installed hereby and the vent holes 62a and 62b of the end plate 60. Thereby, the inner air suctioned through the inner circumferential-side cavities 44a and the outer circumferential-side cavities 44b of the rotor 40 is ventilated in the centrifugal direction by the inner fan 70, so as to pass through the inner air ducts 78, and flow into the drive-side space of the case 12. Then, the inner air of the drive-side space creates a flow mainly passing thorough the vent holes 62a and 62b of the end plate 60, the vent holes of the core holders 46, the inner circumferential-side cavities 44a and the outer circumferential-side cavity 44b of the rotor core 42, and then into the inner fan 70.

On the other hand, when the outer fan 72 rotates, the outside air is suctioned in the outer cover 74 from the inlets 77, and sent in the centrifugal direction by the outer fan 72. The outside air passes through a plurality of air ducts 76, and then is exhausted from the outlets 76b. Thus, by circulating the outside air along the external surface of the case 12, the case 12 and the entire rotary electric device 10 can be cooled down by the outside air. Further, the inner air ducts 78 are provided adjacent to the air ducts 76 for outside air, and with this configuration, heat exchange occurs between the inner air passing through the inner air ducts 78 and the outside air flowing through the air ducts 76, and thus the inner air is cooled down. Thus, cooled inner air can be sent into the case 12.

As described above, by circulating air within the rotary electric device 10 by the inner fan 70, a wind flows through the flux barriers (the inner circumferential-side cavities 44a and the outer circumferential-side cavities 44b) of the rotor 40 in the axial direction at high speed. While wind passing through the flux barriers, the flow speed of the wind on the surfaces of the permanent magnets 50 increases, thereby improving the heat conductivity. Thus, with the wind or inner air which passes through the flux barriers, the permanent magnets 50 can be directly cooled down efficiently. Usually, the temperature near the central portion of each permanent magnet mostly easily becomes high, but the permanent magnets near the center can be directly cooled due to the flux barrier ventilation structure. Therefore, it is possible to suppress the increase in temperature in the longitudinal central portion of each permanent magnet 50. Such a ventilation structure can be achieved by merely a simple structure of providing the vent holes 62a and 62b in the end plate 60.

Here, when the number of the blades 80 of the inner fan 70 and the circumferential periodicity of the flux barriers are matched with each other, the amounts of winds passing through the flux barriers can be equalized to each other, and thus regional temperature rise (local heat) of the rotor can be suppressed. Further, when the outer diameter of the inlets 84 of the inner fan 70 is set larger than the outer diameter of the installation position of the vent holes 62a and 62b of the end plate 60, the amount of winds passing through the flux barriers can be increased.

As described above, according to this embodiment, a rotary electric device in which the permanent magnets of the rotor can be cooled down efficiently can be obtained.

Next, rotary electric devices according to another embodiments will now be described. Note in another embodiments described below, the same elements as those of the first embodiment described above will be denoted by the same referential symbols as in the first embodiment and the detailed explanations therefor may be omitted or simplified focusing on different parts from those of the first embodiment.

### (Second Embodiment)

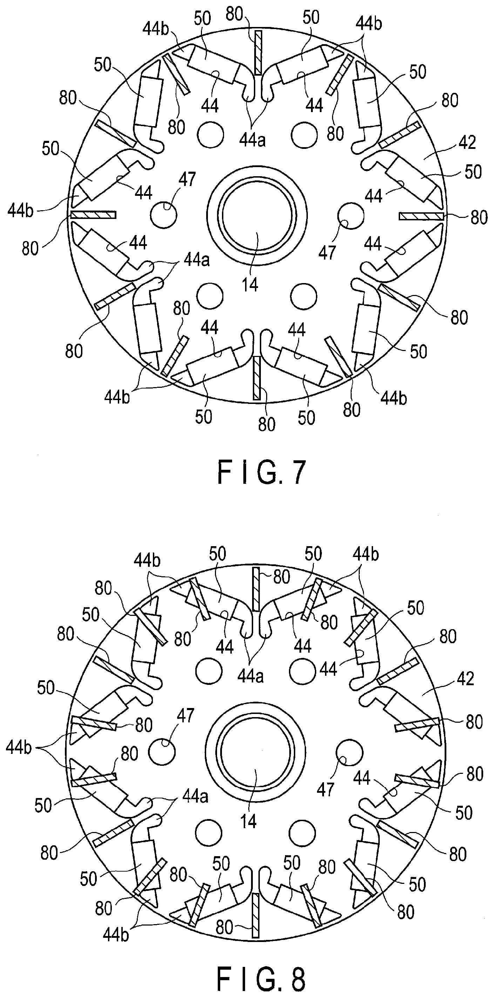

FIG. 7 is a cross sectional view schematically showing the locations of blades of the inner fan and flux barriers of the rotor core in relation to each other in a rotary electric device according to a second embodiment.

The number of blades 80 of the inner fan 70 is not limited to six, but it may be set as an integral multiple of the circumferential periodicity of the magnet embedding holes (flux barriers) 44, i.e., the number of patterns of permanent magnets 50 in the circumferential direction (the number of poles). As shown in FIG. 7, according to the second embodiment, twice the number of poles, that is, twelve blades 80 are provided. The blades 80 are arranged to each extend in the radial direction with respect to the central axis C and at equal intervals in the circumferential direction around the central axis C. Of the twelve, six blades 80 are disposed at positions to oppose the d axes, respectively.

Thus, even when an inner fan with twelve blades 80 is used, the amounts of winds passing through the flux barriers of the rotor core 42 are equalized to each other, thereby making it possible to suppress a regional temperature rise (local heat) of the rotor 40.

### (Third Embodiment)

FIG. 8 is a cross sectional view schematically showing the locations of blades of the inner fan and flux barriers of the rotor core in relation to each other in a rotary electric device according to a third embodiment.

As shown in FIG. 8, according to the third embodiment, the inner fan 70 comprises eighteen blades 80, three times the number of poles. The blades 80 are arranged to each extend in the radial direction with respect to the central axis C and at equal intervals in the circumferential direction around the central axis C. Of the eighteen, six blades 80 are disposed at positions to oppose the d axes, respectively.

Thus, even when eighteen blades 80 are used, the amounts of winds passing through the flux barriers of the rotor core 42 are equalized to each other, thereby making it possible to suppress a regional temperature rise (local heat) of the rotor 40.

### (Fourth Embodiment)

In the embodiments described above, the flux barriers of the rotor core are configured from the magnet embedding holes in contact with permanent magnets, respectively, but the flux barriers may be provided in sites where they are not brought into contact with the permanent magnets. The flux barriers can be provided in sites where the performance of the rotary electric device improves when they are provided as, for example, sites or space where the magnetic flux which passes through the rotor core is week.

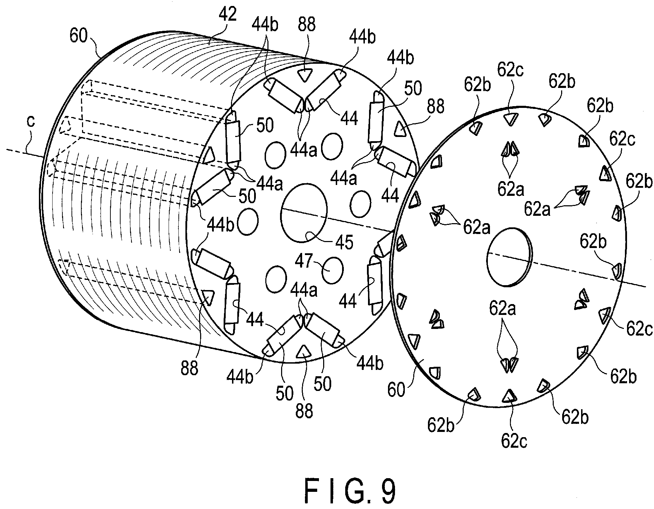

FIG. 9 is an exploded perspective view showing a rotor core and end plate in a rotary electric device according to a fourth embodiment. According to this embodiment, the rotor core 42 includes flux barriers provided at sites where they are not brought into contact with the permanent magnets 50, in addition to the flux barriers consisting respectively of the magnet embedding holes 44. For example, the flux barriers include cavity holes 88 formed on the d axes, respectively, between a pair of permanent magnets 50 in each magnetic pole of the rotor core 42. The cavity holes 88 extend to penetrate the rotor core 42 in the axial direction, and are opened to both axial end surfaces of the rotor core 42.

In each end plate 60, a plurality of vent holes 62c respectively opposing the cavity holes 88 are formed in addition to the vent holes 62a and 62b. When core holders (not shown) cover the end plate 60, vent holes are also formed in the core holders so as to oppose the cavity holes 88, respectively.

According to the rotary electric device comprising the rotor core 42 and the end plate 60 configured as above, while in operation, wind flows also through the cavity holes 88 in addition to the flux barriers (the inner circumferential-side cavities 44a and the outer circumferential-side cavities 44b) of the rotor core 42, and therefore the increase in temperature in the rotor core 42 can be reduced. According to this embodiment, the temperature of the entire rotor core can be reduced, making it possible to further reduce the temperature of the permanent magnets.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims are intended to cover such forms or modifications as would fall within the scope of the inventions.

For example, the number of poles, the dimensions, shape and the like of the rotor are not limited to those of the embodiments provided above, but can be variously modified according to the design. The shape of the cross section of the magnet embedding holes configured as flux barriers, and the shape of the cross section of cavity holes not limited to those of the embodiments provided above, but can be selected from various shapes.

## Claims

1. A rotary electric device comprising:
a rotor (40) which comprises:
a rotation shaft (14) provided rotatable around a central axis;
a rotor core (42) formed of a plurality of core plates laminated, attached to the rotation shaft coaxially therewith, and including a first end surface located in one axial end side and a second end surface located in other axial end side;
a plurality of permanent magnets (50) provided in the rotor core (42); and
a pair of end plates (60) disposed respectively on the first end surface and the second end surface of the rotor core;
a case (12) accommodating the rotor (40) and supporting the rotation shaft (14) via a bearing;
a stator (20) including an annular stator core (22) disposed around an outer circumference of the rotor core (42) with a gap therebetween and fixed to the case, and an armature coil (23) wound around the stator core; and
a cooling fan (70) provided in the case (12) so as to be rotatably together with the rotation shaft (14) around the central axis,
wherein
the rotor core (42) comprises a plurality of cavity holes (44) each formed to penetrate the rotor core in an axial direction and opened to the first end surface and the second end surface of the rotor core;
the plurality of permanent magnets (50) are accommodated in the cavity holes (44) and extend in the axial direction of the rotor core; and
each of the end plates (60) comprises a plurality of vent holes (62a, 62b) communicating at least partially with the cavity holes (44), respectively; and **characterized in that**
the cooling fan comprises
a fan-shaped main body (70a),
an annular outer circumferential frame (70b) disposed to oppose an outer circumferential surface of the main body (70a) with a gap therebetween,
a plurality of blades (80) provided between the main body (70a) and the outer circumferential frame (70b), and
inlets (84) opposing the vent holes (62a, 62b) of the end plate (60),
wherein the inlets (84) are specified between the outer circumferential surface of the main body (70a) and an inner circumferential end portion of the outer circumferential frame (70b).

2. The rotary electric device of claim 1, **characterized in that** each of the cavity holes (44) includes a magnet loading region where the permanent magnet (50) is accommodated, and a first cavity (44a) and a second cavity (44b) brought into contact with the permanent magnet, and
each of the end plates (60) comprises a first vent hole (62a) communicating with the first cavity (44a) and a second vent hole (62b) communicating with the second cavity (44b).

3. The rotary electric device of claim 1, **characterized in that** the plurality of blades (80) extend from the inlets toward outlets, respectively, and the plurality of blades are arranged at equal intervals in a circumferential direction of the rotation shaft (14), and the number of the blades matches with the number of poles of the rotor core (42) or an integral multiple of the number of poles.

4. The rotary electric device of claim 1, **characterized in that** an outer diameter of the inlets (84) of the cooling fan (70) is greater than an outermost diameter of an area in which the cavity holes (44) are provided.

5. The rotary electric device of any one of claims 1 to 4, **characterized by** further comprising:
a pair of core holders (46) abutting to the end plates (60) and holding the rotor core (42) from both axial end sides,
in that each of the core holders comprises a plurality of through holes (66a, 66b) communicating with the vent holes (62a, 62b) of the end plate.

6. The rotary electric device of any one of claims 1 to 5, **characterized in that** the rotor core (42) comprises a plurality of second cavity holes (88) each formed to penetrate the rotor core in the axial direction, and located near the permanent magnets (50), and the end plate (60) comprises a plurality of third vent holes (62c) communicating with the second cavity holes, respectively.

## Patentansprüche

1. Rotationselektromaschine, umfassend:
einen Rotor (40), der umfasst:
eine Drehwelle (14), die um eine Mittelachse herum drehbar bereitgestellt ist;
einen Rotorkern (42), der aus mehreren laminierten Kernplatten gebildet ist, an der Drehwelle koaxial damit angebracht ist und eine erste Endfläche, die sich in einer axialen Endseite befindet, und eine zweite Endfläche umfasst, die sich in einer anderen axialen Endseite befindet;
mehrere Permanentmagnete (50), die in dem Rotorkern (42) bereitgestellt sind; und
ein Paar Endplatten (60), die auf der ersten Endfläche beziehungsweise der zweiten Endfläche des Rotorkerns angeordnet sind;
ein Gehäuse (12), das den Rotor (40) unterbringt und die Drehwelle (14) über ein Lager stützt;
einen Stator (20), der einen ringförmigen Statorkern (22) umfasst, der um einen äußeren Umfang des Rotorkerns (42) herum mit einem Spalt dazwischen angeordnet ist und an dem Gehäuse befestigt ist, und eine Ankerspule (23), die um den Statorkern herum gewickelt ist; und
ein Kühlgebläse (70), das derart in dem Gehäuse (12) bereitgestellt ist, dass es zusammen mit der Drehwelle (14) um die Mittelachse herum drehbar ist,
wobei
der Rotorkern (42) mehrere Hohlraumlöcher (44) umfasst, die jeweils derart gebildet sind, dass sie in den Rotorkern in einer axialen Richtung eindringen und zur ersten Endfläche und zur zweiten Endfläche des Rotorkerns offen sind;
die mehreren Permanentmagnete (50) in den Hohlraumlöchern (44) untergebracht sind und sich in der axialen Richtung des Rotorkerns erstrecken; und
jede der Endplatten (60) mehrere Belüftungslöcher (62a, 62b) umfasst, die jeweils zumindest teilweise mit den Hohlraumlöchern (44) verbunden sind; und
**dadurch gekennzeichnet, dass** das Kühlgebläse umfasst:
einen gebläseförmigen Hauptkörper (70a),
einen ringförmigen äußeren Umfangsrahmen (70b), der derart angeordnet ist, dass er einer äußeren Umfangsfläche des Hauptkörpers (70a) mit einem Spalt dazwischen gegenüberliegt,
mehrere Flügel (80), die zwischen dem Hauptkörper (70a) und dem äußeren Umfangsrahmen (70b) bereitgestellt sind, und
Einlasse (84), die den Belüftungslöchern (62a, 62b) der Endplatte (60) gegenüberliegen, wobei die Einlasse (84) zwischen der äußeren Umfangsfläche des Hauptkörpers (70a) und einem inneren Umfangsendabschnitt des äußeren Umfangsrahmens (70b) vorgesehen sind.

2. Rotationselektromaschine nach Anspruch 1, **dadurch gekennzeichnet, dass** jedes der Hohlraumlöcher (44) eine Magnetladeregion, wo der Permanentmagnet (50) untergebracht ist, und einen ersten Hohlraum (44a) und einen zweiten Hohlraum (44b) umfasst, die mit dem Permanentmagneten in Kontakt gebracht werden, und
jede der Endplatten (60) ein erstes Belüftungsloch (62a), das mit dem ersten Hohlraum (44a) verbunden ist, und ein zweites Belüftungsloch (62b) umfasst, das mit dem zweiten Hohlraum (44b) verbunden ist.

3. Rotationselektromaschine nach Anspruch 1, **dadurch gekennzeichnet, dass** die mehreren Flügel (80) sich jeweils von den Einlassen hin zu Auslassen erstrecken und die mehreren Flügel in gleichen Intervallen in einer Umfangsrichtung der Drehwelle (14) angeordnet sind, und die Anzahl der Flügel mit der Anzahl von Polen des Rotorkerns (42) oder einem ganzzahligen Vielfachen der Anzahl von Polen übereinstimmt.

4. Rotationselektromaschine nach Anspruch 1, **dadurch gekennzeichnet, dass** ein äußerer Durchmesser der Einlasse (84) des Kühlgebläses (70) größer als ein äußerster Durchmesser eines Bereichs ist, in dem die Hohlraumlöcher (44) bereitgestellt sind.

5. Rotationselektromaschine nach einem der Ansprüche 1 bis 4, **dadurch gekennzeichnet, dass** sie ferner umfasst:
ein Paar Kernhalter (46), die an die Endplatten (60) anstoßen und den Rotorkern (42) von beiden axialen Endseiten halten,
dadurch, dass jeder der Kernhalter mehrere Durchgangslöcher (66a, 66b) umfasst, die mit den Belüftungslöchern (62a, 62b) der Endplatte verbunden sind.

6. Rotationselektromaschine nach einem der Ansprüche 1 bis 5, **dadurch gekennzeichnet, dass** der Rotorkern (42) mehrere zweite Hohlraumlöcher (88) umfasst, die jeweils derart gebildet sind, dass sie in den Rotorkern in der axialen Richtung eindringen, und sich nahe an den Permanentmagneten (50) befinden, und die zweite Endplatte (60) mehrere dritte Belüftungslöcher (62c) umfasst, die jeweils mit den zweiten Hohlraumlöchern verbunden sind.

## Revendications

1. Dispositif électrique rotatif comprenant :
un rotor (40) qui comprend :
un arbre de rotation (14) prévu rotatif autour d'un axe central ;
un noyau de rotor (42) constitué d'une pluralité de plaques de noyau stratifiées, fixées à l'arbre de rotation de manière coaxiale à celui-ci, et incluant une première surface d'extrémité située d'un côté d'extrémité axiale et une deuxième surface d'extrémité située de l'autre côté d'extrémité axiale ;
une pluralité d'aimants permanents (50) prévus dans le noyau de rotor (42) ; et
une paire de plaques d'extrémité (60) disposées respectivement sur la première surface d'extrémité et la deuxième surface d'extrémité du noyau de rotor ;
un boîtier (12) logeant le rotor (40) et supportant l'arbre de rotation (14) via un palier ;
un stator (20) incluant un noyau de stator annulaire (22) disposé autour d'une circonférence extérieure du noyau de rotor (42) avec un espacement entre eux et fixé au boîtier, et une bobine d'induit (23) enroulée autour du noyau de stator ; et
un ventilateur de refroidissement (70) prévu dans le boîtier (12) de manière à être solidaire en rotation de l'arbre de rotation (14) autour de l'axe central,
dans lequel
le noyau de rotor (42) comprend une pluralité de trous de cavité (44) constitués chacun pour pénétrer le noyau de rotor dans une direction axiale et ouverts vers la première surface d'extrémité et la deuxième surface d'extrémité du noyau de rotor ;
la pluralité d'aimants permanents (50) sont logés dans les trous de cavité (44) et s'étendent dans la direction axiale du noyau de rotor ; et
chacune des plaques d'extrémité (60) comprend une pluralité de trous d'évent (62a, 62b) respectivement en communication au moins partiellement avec les trous de cavité (44) ; et
**caractérisé en ce que** le ventilateur de refroidissement comprend
un corps principal en forme d'éventail (70a),
un cadre circonférentiel extérieur annulaire (70b) disposé en regard d'une surface circonférentielle extérieure du corps principal (70a) avec un espacement entre eux,
une pluralité de pales (80) prévues entre le corps principal (70a) et le cadre circonférentiel extérieur (70b), et
des entrées (84) en regard des trous d'évent (62a, 62b) de la plaque d'extrémité (60), dans lequel les entrées (84) sont spécifiées entre la surface circonférentielle extérieure du corps principal (70a) et une partie d'extrémité circonférentielle intérieure du cadre circonférentiel extérieur (70b).

2. Dispositif électrique rotatif selon la revendication 1, **caractérisé en ce que** chacun des trous de cavité (44) inclut une région de chargement d'aimant dans laquelle l'aimant permanent (50) est logé, et une première cavité (44a) et une deuxième cavité (44b) mises en contact avec l'aimant permanent, et
chacune des plaques d'extrémité (60) comprend un premier trou d'évent (62a) en communication avec la première cavité (44a) et un deuxième trou d'évent (62b) en communication avec la deuxième cavité (44b).

3. Dispositif électrique rotatif selon la revendication 1, **caractérisé en ce que** la pluralité de pales (80) s'étendent respectivement des entrées vers des sorties, et la pluralité de pales sont agencées à des intervalles égaux dans une direction circonférentielle de l'arbre de rotation (14), et le nombre de pales correspond au nombre de pôles du noyau de rotor (42) ou est un multiple entier du nombre de pôles.

4. Dispositif électrique rotatif selon la revendication 1, **caractérisé en ce qu'**un diamètre extérieur des entrées (84) du ventilateur de refroidissement (70) est plus grand qu'un diamètre le plus extérieur d'une zone dans laquelle les trous de cavité (44) sont prévus.

5. Dispositif électrique rotatif selon l'une quelconque des revendications 1 à 4, **caractérisé en ce qu'**il comprend en outre :
une paire de supports de noyau (46) venant en butée contre les plaques d'extrémité (60) et maintenant le noyau de rotor (42) depuis les deux côtés d'extrémité axiale,
**en ce que** chacun des supports de noyau comprend une pluralité de trous traversants (66a, 66b) en communication avec les trous d'évent (62a, 62b) de la plaque d'extrémité.

6. Dispositif électrique rotatif selon l'une quelconque des revendications 1 à 5, **caractérisé en ce que** le noyau de rotor (42) comprend une pluralité de deuxièmes trous de cavité (88) constitués chacun pour pénétrer le noyau de rotor dans la direction axiale, et situés près des aimants permanents (50), et la plaque d'extrémité (60) comprend une pluralité de troisièmes trous d'évent (62c) en communication respectivement avec les deuxièmes trous de cavité.
